# EUROPEAN PATENT APPLICATION

(11) **EP 2 871 489 A1**
(43) Date of publication of application: **13.05.2015**
(21) Application number: 14191649.4
(22) Date of filing: 04.11.2014
(51) Int. Cl.: G01S 7/02, G01S 13/93

(54) **Obstruction detecting device**

(30) Priority: 05.11.2013 JP 2013229663
(71) Applicant: Toyota Jidosha Kabushiki Kaisha, Toyota-shi, Aichi-ken 471-8571 (JP)
(72) Inventor: Niwa, Takuto, Aichi-ken,, 471-8571 (JP)
(74) Representative: Kuhnen & Wacker

(57) **Abstract**

A connection-wire connector (18) is disposed on a back surface (14) of an obstruction detecting device (10) so that its short direction is along a vehicle front-rear direction. Accordingly, a distance (L1) of the obstruction detecting device (10) with respect to a rear member (60) is longer than a distance (L2) thereof with respect to the rear member (60) in a case where the connection-wire connector is disposed so that its longitudinal direction is along the vehicle front-rear direction, thereby improving pedestrian protection performance. Further, since the connection-wire connector (18) is disposed on the back surface (14) of the device main body (12), the connection-wire connector (18) is hard to be viewed from an opening of a front grille (42), so that a design thereof is not impaired.

## Description

### BACKGROUND OF THE INVENTION

### 1. Field of the Invention

The present invention relates to an obstruction detecting device placed in a vehicle front portion.

### 2. Description of Related Art

In a vehicle front portion of an automobile, more specifically, behind a front grille, an obstruction detecting device is provided so as to detect other vehicles and the like. The obstruction detecting device is placed behind an emblem mounting portion so that the obstruction detecting device is not observable from an opening of the front grille and a design of the vehicle is not impaired. For example, the obstruction detecting device has a configuration described in Japanese Patent Application Publication No. 2003-202369 (JP 2003-202369 A).

In the meantime, in order to secure easiness in connection operation and a degree of freedom of the design, the obstruction detecting device is configured such that a connection-wire connector to be connected to a power supply or the like is placed so as to project from a back face of the device so that its longitudinal direction is toward a rear side in a vehicle front-rear direction

However, if the connection-wire connector of the obstruction detecting device is placed in a projecting manner so that its longitudinal direction is toward the rear side in the vehicle front-rear direction, a distance thereof with respect to a member (hereinafter referred to as "rear member") placed on the rear side relative to the obstruction detecting device in the vehicle front-rear direction is shortened. As a result, when the vehicle collides with a pedestrian and a load is input into a front bumper, the connection-wire connector of the obstruction detecting device abuts with the rear member early, so that a reaction force rises early. In this respect, there is room for improvement.

In the meantime, from the reason of the connection operation, the design, and the like, it is necessary for the connection-wire connector to be provided on the back surface of the obstruction detecting device. A reason thereof is as follows: if the connection-wire connector is provided on a side surface or a lower surface of the obstruction detecting device in a standing manner, a workspace cannot be secured, so that it is very difficult to perform the connection operation. Further, if the connection-wire connector is provided on a top surface thereof in a standing manner, rain water might get into an opening thereof. Further, if the connection-wire connector is attached to the side surface, the obstruction detecting device (the connection-wire connector) is observable from the opening of the front grille, so that its design might be impaired.

### SUMMARY OF THE INVENTION

The present invention provides an obstruction detecting device that is able to improve pedestrian protection performance without impairing a design of a front grille at the time when the obstruction detecting device is mounted in a vehicle.

A first aspect of the present invention relates to an obstruction detecting device including: a main body disposed on a rear side, in a vehicle front-rear direction, of an emblem mounting portion of a front grille of a vehicle; and a connection-wire connector disposed on a back surface of the main body which faces rearward in the vehicle front-rear direction, so that its short direction is along the vehicle front-rear direction.

The connection-wire connector is disposed on the back surface of the main body so that its short direction is along the vehicle front-rear direction. Accordingly, in comparison with an obstruction detecting device in which a connection-wire connector is disposed so that its longitudinal direction is along the vehicle front-rear direction, it is possible to lengthen a distance of the obstruction detecting device to a member disposed on the rear side relative to the obstruction detecting device in the vehicle front-rear direction. As a result, at the time when a load is input into a front bumper, a time is prolonged until the obstruction detecting device (the connection-wire connector) collides with the member placed on the rear side in the vehicle front-rear direction, so that rising of a reaction force is delayed. This makes it possible to improve pedestrian protection performance.

Note that the "longitudinal direction" of the connection-wire connector is a direction of that side of the connection-wire connector which is longest when the connection-wire connector is viewed in a side view, and the "short direction" is a direction of that side of the connection-wire connector which is shorter than the side in the longitudinal direction.

Further, since the connection-wire connector is provided on the back surface of the main body, it is possible to restrain influence on designs of an emblem and a front grille, in comparison with a case where the connection-wire connector is provided on a side surface of the obstruction detecting device.

The connection-wire connector may have an opening to which a connection wire is connected, the opening being opened in a vehicle width direction or in a direction inclined with respect to the vehicle width direction toward a lower side in a vehicle up-down direction.

In the obstruction detecting device, since that opening of the connection-wire connector to which the connection wire is connected is opened in the vehicle width direction or in the direction inclined with respect to the vehicle width direction toward the lower side in the vehicle up-down direction, water is unlikely to be accumulated in the opening. Note that in a case where the opening is opened toward the lower side in the vehicle up-down direction, the connection wire connected to the connection-wire connector might be viewed from a lower side of the emblem, which is unfavorable.

A second aspect of the present invention relates to an obstruction detecting device including: a main body disposed on a rear side, in a vehicle front-rear direction, of an emblem mounting portion of a front grille of a vehicle; and a connection-wire connector disposed on a back surface of the main body which faces rearward in the vehicle front-rear direction, and having an opening to which a connection wire is connected, the opening being opened in a vehicle width direction or in a direction inclined with respect to the vehicle width direction toward a lower side in a vehicle up-down direction.

The opening of the connection-wire connector disposed on the back surface of the main body is opened in the vehicle width direction or in the direction inclined with respect to the vehicle width direction toward the lower side in the vehicle up-down direction. Accordingly, a plug connected to the opening extends in a direction perpendicular to the vehicle front-rear direction. Accordingly, in comparison with a plug to be connected to a connection-wire connector having an opening opened toward the rear side in the vehicle front-rear direction, it is possible to lengthen a distance of the obstruction detecting device to a member disposed on the rear side relative to the obstruction detecting device in the vehicle front-rear direction. As a result, at the time when a load is input into a front bumper, a time is prolonged until the obstruction detecting device (the plug connected to the connection-wire connector) collides with the member placed on the rear side in the vehicle front-rear direction, so that rising of a reaction force is delayed. This makes it possible to improve pedestrian protection performance.

Further, since the connection-wire connector is provided on the back surface of the main body, it is possible to restrain influence on designs of an emblem and a front grille, in comparison with a case where the connection-wire connector is provided on a side surface of the obstruction detecting device.

Moreover, since that opening of the connection-wire connector to which the connection wire is connected is opened in the vehicle width direction or in the direction inclined with respect to the vehicle width direction toward the lower side in the vehicle up-down direction, water is unlikely to be accumulated in the opening. Note that in a case where the opening is opened toward the lower side in the vehicle up-down direction, the connection wire connected to the connection-wire connector might be viewed from a lower side of the emblem, which is unfavorable.

The connection-wire connector may be placed within a range of the main body in a vehicle front view.

In the obstruction detecting device, since the connection-wire connector provided on the back surface of the main body is within the range of the main body in a vehicle front view, the connection-wire connector is not observable from the opening of the front grille, thereby making it possible to restrain the design of the front grille from being impaired.

Since the present invention has the configuration described above, it is possible to improve pedestrian protection performance without impairing a design of a front grille at the time when the obstruction detecting device is mounted in a vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a front view illustrating a vehicle front surface according to an embodiment of the present invention;
FIG. 2 is a perspective view of an obstruction detecting device mounted on a front grille, according to the embodiment of the present invention;
FIG. 3 is a back view of the obstruction detecting device mounted on the front grille, according to the embodiment of the present invention;
FIG. 4 is a sectional view taken along a line 4-4 in FIG. 3; and
FIG. 5 is a plan view of the obstruction detecting device mounted on the front grille, according to the embodiment of the present invention.

### DETAILED DESCRIPTION OF EMBODIMENTS

An obstruction detecting device according to an embodiment of the present invention is described below.

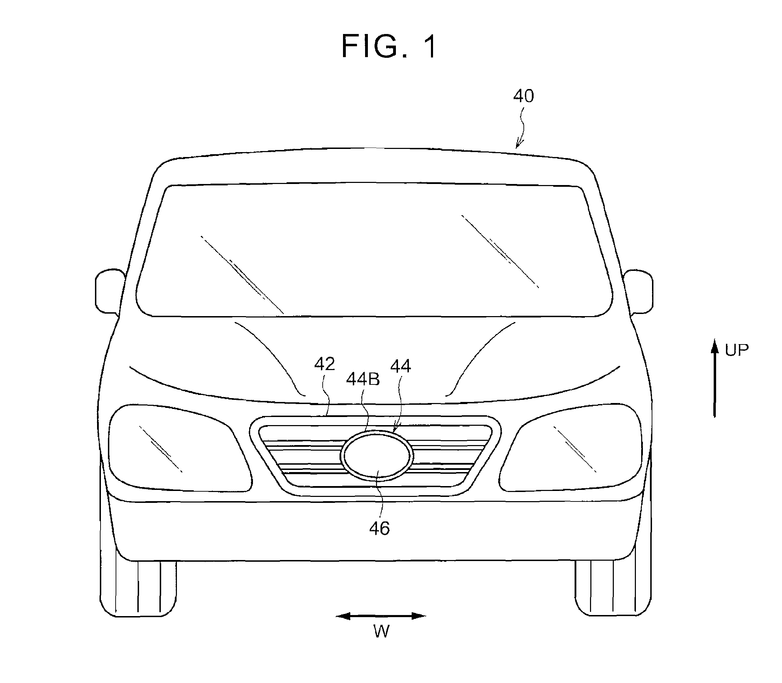

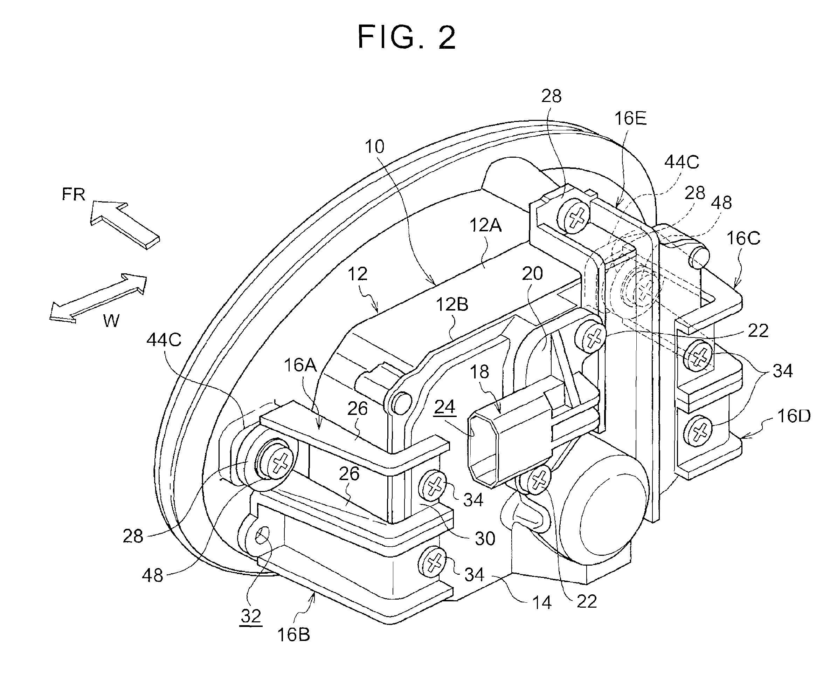

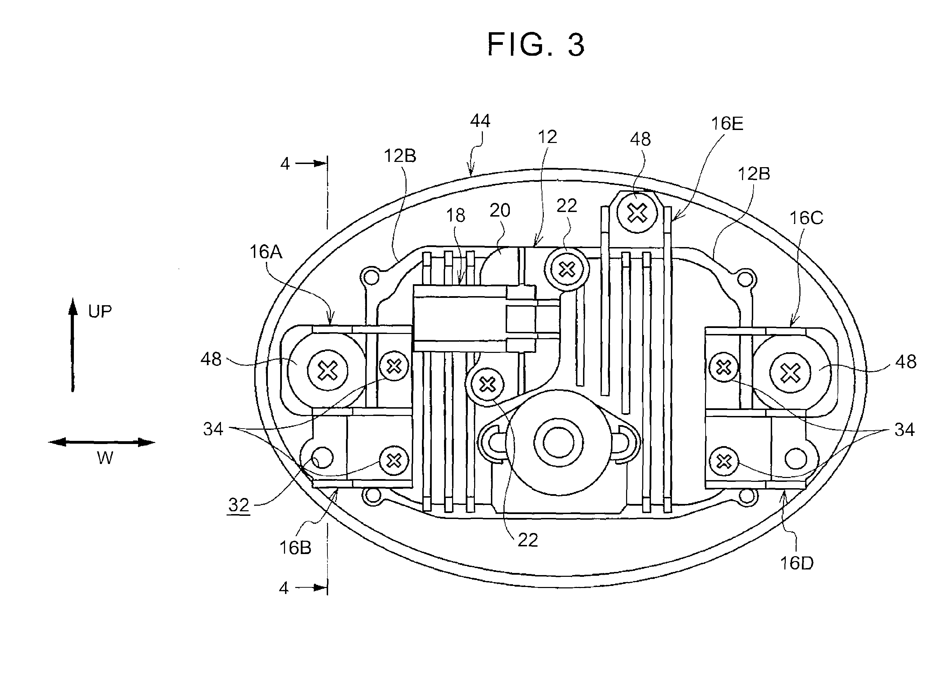

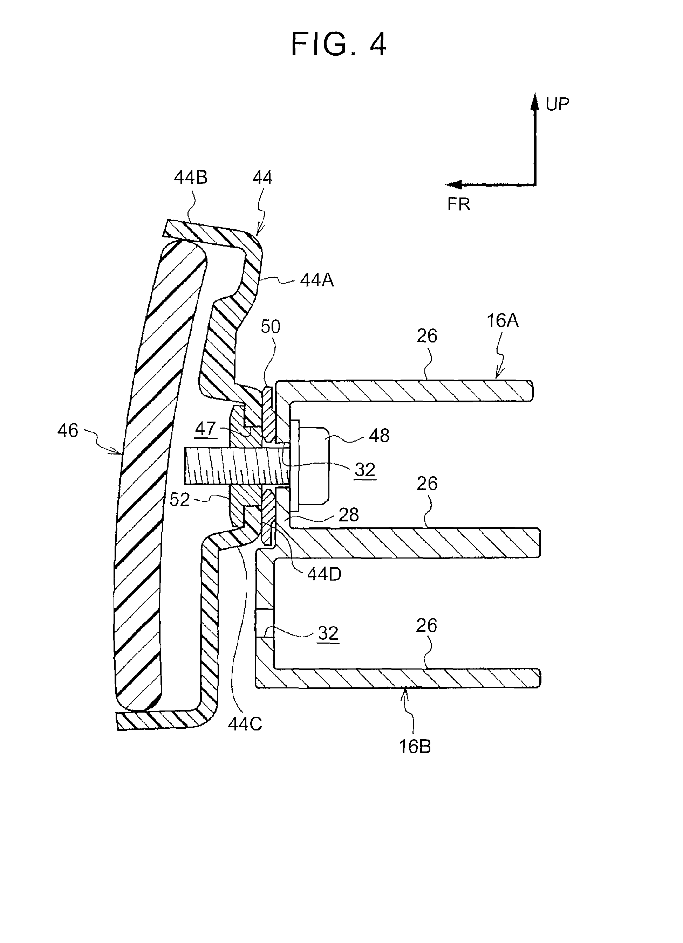

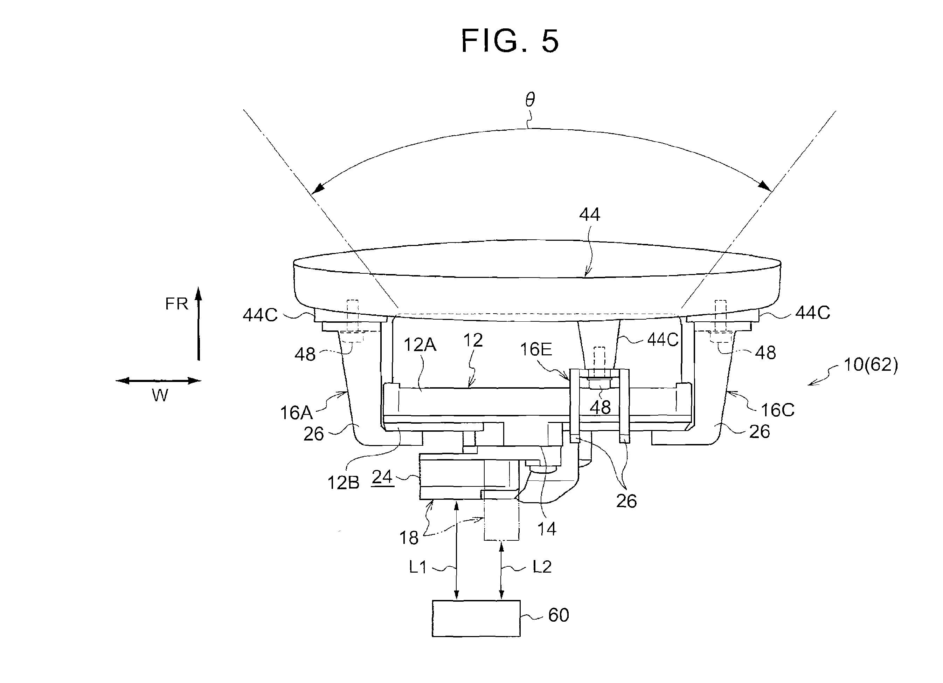

FIG. 1 is a front view of a vehicle front surface on which the obstruction detecting device is mounted; FIG. 2 is a perspective view of the obstruction detecting device mounted on a front grille; FIG. 3 is a back view of the obstruction detecting device mounted on the front grille; FIG. 4 is a sectional view taken along a line 4-4 in FIG. 3; and FIG. 5 is a plan view of the obstruction detecting device mounted on the front grille. In each figure, a vehicle width direction is indicated by an arrow W, an upper side in a vehicle up-down direction (hereinafter also referred to as a vehicle upper side) is indicated by an arrow UP, and a front side in a vehicle front-rear direction (hereinafter also referred to as a vehicle front side) is indicated by an arrow FR.

First, an outline of the obstruction detecting device is described, and then, a state where the obstruction detecting device is attached to a vehicle is described in detail.

As illustrated in FIG. 2, an obstruction detecting device 10 is basically constituted by a device main body 12 having a generally rectangular shape, a connection-wire connector 18 provided on a back surface 14 of the device main body 12, and mounting brackets 16A to 16E configured such that two of them are attached on each side surface of the device main body from the back surface 14 of the device main body 12, and one of them is attached to a top surface of the device main body.

The device main body 12 is constituted by a resin upper case 12A having a generally rectangular box-like shape, and a metal lower case 12B (made of aluminum die cast, for example) having a generally flat-plate shape and fastened to the upper case 12A at four corners. A radar sending device and a radar receiving device (not shown) are housed in a rectangular case formed by the upper case 12A and the lower case 12B. Note that, in the generally rectangular shape of the device main body 12, a direction where the upper case 12A is superimposed on the lower case 12B may be referred to as a thickness direction, a longitudinal direction of the rectangular shape may be referred to as a lateral direction, and a short direction of the rectangular shape may be referred to as a vertical direction, for descriptive purposes.

The connection-wire connector 18 is fastened to the lower case 12B with bolts 22 via a mounting flange 20. The connection-wire connector 18 has a generally rectangular shape, its longitudinal direction coincides with the lateral direction of the device main body 12, and an opening 24 is formed on a tip thereof in the longitudinal direction. The opening 24 is opened toward the longitudinal direction, and a receptacle of the connector is formed inside the opening 24. When a plug (not shown) provided in a tip of a connection wire is inserted into the opening 24, the plug can be connected to the receptacle provided in the opening 24.

Further, as illustrated in FIG. 3, when viewed from a rear side in the vehicle front-rear direction, that is, in a vehicle back view or a vehicle front view, the connection-wire connector 18 is placed within a range of the device main body 12. Note that, in a case where the plug provided in the tip of the connection wire is connected to the receptacle of the connection-wire connector 18, it is preferable that the plug be also provided so as to be included at least within a range of the after-mention emblem mounting portion 44.

As illustrated in FIG. 2, the mounting bracket 16A includes arm portions 26 made of a pair of L-shaped plate materials parallel to each other, and mounting surfaces 28, 30 for connecting ends of the arm portions 26 to each other. Note that, in the mounting surface 28 having a disciform shape, a hole portion 32 for bolt insertion is formed so that the mounting bracket 16A is fastened to a mounting portion 44C of the after-mentioned emblem mounting portion 44 (see FIG. 4), and in the mounting surface 30, a hole portion (not shown) for bolt insertion is formed so that the mounting bracket 16A is fastened to the lower case 12B. Note that, since the mounting brackets 16B to 16E have generally the same configuration as the mounting bracket 16A, detailed descriptions thereof are omitted herein.

Accordingly, the mounting brackets 16A to 16E are fastened to the lower case 12B of the device main body 12 with the bolts 34 inserted into the hole portions (not shown) of the mounting surfaces 30, and thus, the mounting brackets 16A to 16E are integrated with the device main body 12.

The obstruction detecting device 10 configured as such is mounted on a rear side, in the vehicle front-rear direction, of the emblem mounting portion 44 of a front grille 42 on a front surface of a vehicle 40, as illustrated in FIG. 1.

The emblem mounting portion 44 is made of resin, and as illustrated in FIGS. 1 and 4, the emblem mounting portion 44 includes a circular plate portion 44A having a generally elliptical shape in a vehicle front view, and an edge portion 44B formed on a front side, in the vehicle front-rear direction, of a peripheral part of the circular plate portion 44A so as to project from the circular plate portion 44A. Accordingly, an emblem 46 is placed in front of the circular plate portion 44A, and supported by the edge portion 44B.

Further, as illustrated in FIG. 2, in the emblem mounting portion 44, mounting portions 44C projecting from the circular plate portion 44A toward the rear side in the vehicle front-rear direction are formed in positions where the obstruction detecting device 10 (the mounting surfaces 28 of the mounting brackets 16A, 16C, 16E) is fastened. As illustrated in FIG. 4, the mounting portion 44C is formed in a projecting manner from the circular plate portion 44A toward the rear side in the vehicle front-rear direction so as to have a hat-shaped section, and a hole portion 47 for mounting a nut therein is formed in a top face 44D thereof.

Here, the mounting bracket 16A is fastened to the emblem mounting portion 44 as follows. That is, the mounting surface 28 of the mounting bracket 16A of the obstruction detecting device 10 is welded with pressure to the top face 44D of the mounting portion 44C of the emblem mounting portion 44 with a metal washer 50 being provided therebetween. Then, a metal stepped nut 52 is fitted to the hole portion 47 of the mounting portion 44C. Subsequently, a metal bolt 48 is threadedly engaged to the nut 52 from a side of the mounting surface 28 of the mounting bracket 16A, so that the mounting bracket 16A is fastened to the emblem mounting portion 44. The mounting brackets 16C, 16E are also fastened to the emblem mounting portion 44 in the same manner. That is, the obstruction detecting device 10 is fixed to the emblem mounting portion 44 by fastening at three points on both sides of the device main body 12 in the vehicle width direction and on an upper side of the device main body 12 in the vehicle up-down direction.

When the obstruction detecting device 10 is mounted on the rear side, in the vehicle front-rear direction, of the emblem mounting portion 44 of the front grille 42 of the vehicle 40 as such, a lateral direction of the obstruction detecting device 10 coincides with the vehicle width direction. Accordingly, a longitudinal direction of the connection-wire connector 18 coincides with the vehicle width direction, and the opening 24 is opened in the vehicle width direction. Further, a short direction, which is a direction of a shortest side among three sides constituting the rectangular shape of the connection-wire connector 18, coincides with the vehicle front-rear direction.

Operations of the obstruction detecting device 10 configured as such and a mounting structure thereof are described below.

The obstruction detecting device 10 mounted on the emblem mounting portion 44 of the front grille 42 is configured such that the longitudinal direction of the connection-wire connector 18 provided on the back surface 14 of the device main body 12 coincides with the vehicle width direction, and the short direction thereof coincides with the vehicle front-rear direction. Here, as illustrated in FIG. 5, in a case of an obstruction detecting device 62 of a comparative example in which a longitudinal direction of a connection-wire connector 18 thereof (an alternate long and two short dashes line portion 18 in FIG. 5) coincides with the vehicle front-rear direction, a distance thereof with respect to a member (hereinafter referred to as "rear member") 60 placed on a rear side relative to the obstruction detecting device 62 in the vehicle front-rear direction is L2. In contrast, in the obstruction detecting device 10 according to the present embodiment, its distance with respect to the rear member 60 is L1, which is longer than L2. As a result, for example, when the vehicle collides with a pedestrian and a load is input into a front bumper, a time is prolonged until the obstruction detecting device 10 (the connection-wire connector 18) abuts with the rear member 60, thereby delaying rising of a reaction force. Accordingly, it is possible to improve pedestrian protection performance. Further, it is possible to restrain a possibility that the obstruction detecting device 10 is broken.

In the meantime, since the connection-wire connector 18 is disposed within the range of the device main body 12 in a vehicle front view (see FIG. 3), the connection-wire connector 18 is unlikely to be observed from the opening of the front grille 42, thereby making it possible to improve the degree of freedom of a design of the front grille 42. Particularly, if the plug of the connection wire (not shown) fitted to the receptacle provided in the opening 24 of the connection-wire connector 18 is also disposed within the range of the device main body 12 in a vehicle front view, the possibility that the connection wire itself is viewed from the opening of the front grille 42 is further reduced, thereby making it possible to further improve the degree of freedom of the design of the front grille 42.

Further, since the connection-wire connector 18 is placed on the back-surface-14 side of the device main body 12, no restriction is added to the degree if freedom of the design in terms of the shape or the like of the emblem mounting portion 44, unlike a case where the connection-wire connector 18 is placed on the side surface thereof.

Further, since the opening 24 of the connection-wire connector 18 is opened in the vehicle width direction, water is unlikely to be accumulated in the opening 24, unlike a case where the opening 24 is opened toward the upper side in the vehicle up-down direction. Note that, in a case where the opening 24 is opened toward the lower side in the vehicle up-down direction, the connection wire connected to the opening 24 may be viewed from that opening of the front grille which is provided below the emblem mounting portion 44, so that the design of the front grille 42 is impaired.

In the meantime, in the present embodiment, the opening 24 of the connection-wire connector 18 of the obstruction detecting device 10 is opened in the vehicle width direction. However, even in a configuration in which the opening 24 is opened in a direction (except a vehicle lower direction) that is inclined with respect to the vehicle width direction toward the lower side in the vehicle up-down direction, it is possible to yield the same effect as above.

Further, the obstruction detecting device 10 is fastened to the emblem mounting portion 44 by fastening at three points by the mounting brackets 16A, 16C, 16E extending from the back surface 14 of the device main body 12 toward both sides in the vehicle width direction and toward the upper side in the vehicle up-down direction. Accordingly, the device main body 12 is prevented from rotating, thereby resulting in that the obstruction detecting device 10 is accurately fastened to the emblem mounting portion 44.

Further, the obstruction detecting device 10 is fastened to the emblem mounting portion 44 via the metal lower case 12B, the metal mounting brackets 16A, 16C, 16E, the metal bolts 48, the metal washers 50, and the metal nuts 52. Further, the resin mounting portion 44C is formed so as to project from the circular plate portion 44A, thereby improving rigidity. On that account, mounting accuracy of the obstruction detecting device 10 to the emblem mounting portion 44 is improved.

Further, since the emblem mounting portion 44 is made of resin, if its sectional shape is changed according to a shape and a placement angle of the emblem 46, the emblem mounting portion 44 can be fastened to the existing obstruction detecting device 10 at the same position. Accordingly, it is not necessary to manufacture new obstruction detecting devices every time designs of the emblem 46 and the front grille 42 are changed, and it is possible to use them in the obstruction detecting device 10.

Furthermore, since the obstruction detecting device 10 of the present embodiment is mounted on the back surface of the emblem mounting portion 44 of the front grille 42, as illustrated in FIG. 5, it is possible to secure a wide laser illumination angle θ.

Note that, in the present embodiment, the obstruction detecting device 10 is directly mounted on the emblem mounting portion 44, but may be slightly spaced therefrom with some sort of member being provided therebetween.

Further, in the present embodiment, the connection-wire connector 18 is placed within the range of the device main body 12 in a vehicle front view, but the tip of the connection-wire connector 18 may be placed out of the range of the device main body 12. Even in this case, if the tip of the connection-wire connector 18 is placed within a range of the emblem mounting portion 44, it is possible to restrain influence on the design thereof.

In the present embodiment, the longitudinal direction of the rectangular connection-wire connector 18 coincides with an opening direction of the opening 24, but the present invention is not limited to this. That is, that short direction of the connection-wire connector 18 which is shorter than the longitudinal direction thereof should be a direction toward the rear side in the vehicle front-rear direction. Note that, in the present embodiment, the direction of the shortest one of three sides constituting the rectangular shape is assumed the short direction, but any direction may be assumed as the short direction, provided that the direction is shorter than the longitudinal direction.

Further, it is preferable that the opening 24 be opened in the vehicle width direction or in the direction inclined with respect to the vehicle width direction toward the lower side in the vehicle up-down direction, but the present invention is not limited to this.

Accordingly, such a configuration that the longitudinal direction of the connection-wire connector 18 coincides with the vehicle width direction and the opening direction of the opening 24 is toward the rear side in the vehicle front-rear direction is also included in the present invention.

Further, such a configuration that the longitudinal direction of the connection-wire connector 18 coincides with the vehicle front-rear direction and the opening 24 faces the vehicle width direction or the like is also included in the present invention. Alternatively, such a configuration that the connection-wire connector 18 has a cube shape in which its longitudinal direction and its short direction cannot be specified and the opening 24 faces the vehicle width direction or the like is also included in the present invention. A reason thereof is as follows: the plug inserted into the opening 24 faces the vehicle width direction, so that a time is prolonged until the connection-wire connector 18 abuts with the rear member 60, thereby making it possible to delay rising of a reaction force.

## Claims

1. An obstruction detecting device comprising:
a main body (12) disposed on a rear side, in a vehicle front-rear direction, of an emblem mounting portion (44) of a front grille of a vehicle; and
a connection-wire connector (18) disposed on a back surface of the main body which faces rearward in the vehicle front-rear direction, so that a short direction of the connection-wire connector (18) is along the vehicle front-rear direction.

2. The obstruction detecting device according to claim 1, wherein:
the connection-wire connector (18) has an opening to which a connection wire is connected, the opening being opened in a vehicle width direction or in a direction inclined with respect to the vehicle width direction toward a lower side in a vehicle up-down direction.

3. An obstruction detecting device comprising:
a main body (12) disposed on a rear side, in a vehicle front-rear direction, of an emblem mounting portion (44) of a front grille of a vehicle; and
a connection-wire connector (18) disposed on a back surface of the main body which faces rearward in the vehicle front-rear direction, and having an opening to which a connection wire is connected, the opening being opened in a vehicle width direction or in a direction inclined with respect to the vehicle width direction toward a lower side in a vehicle up-down direction.

4. The obstruction detecting device according to any one of claims 1 to 3, wherein:
the connection-wire connector (18) is placed within a range of the main body in a vehicle front view.
